# EUROPEAN PATENT APPLICATION

(11) **EP 4 152 441 A1**
(43) Date of publication of application: **22.03.2023**
(21) Application number: 21822495.4
(22) Date of filing: 19.03.2021
(51) Int. Cl.: H01M 4/134, H01M 4/38, H01M 10/0562, H01M 4/525, H01M 4/505, H01M 10/052, H01M 10/42, H01M 4/02

(54) **ALL-SOLID-STATE BATTERY COMPRISING SILICON (SI) AS ANODE ACTIVE MATERIAL**

(30) Priority: 11.06.2020 US 202063037667 P; 05.03.2021 US 202163157012 P
(71) Applicant: LG Energy Solution, Ltd., Seoul 07335 (KR); The Regents of the University of California, Oakland, CA 94607 (US)
(72) Inventor: LEE, Jeong-Beom, Daejeon 34122 (KR); JUNG, Hye-Ri, Daejeon 34122 (KR); HAN, Hyea-Eun, Daejeon 34122 (KR); HAH, Hoe-Jin, Daejeon 34122 (KR); BANG, Sung-Rok, Daejeon 34122 (KR); MENG, Ying Shirley, La Jolla, California 92093 (US); TAN, Darren Huan Shen, La Jolla, California 92093 (US)
(74) Representative: Plasseraud IP
(86) International application number: PCT/KR2021/003459
(87) International publication number: WO 2021/251598

(57) **Abstract**

The present disclosure relates to a solid state battery comprising silicon (Si) as a negative electrode active material. The solid state battery according to the present disclosure does not comprise a conductive material and a solid electrolyte in the negative electrode and comprise a minimum amount of binder. According to this structural feature, the battery according to the present disclosure has good electrical and chemical properties including heat resistant stability, energy density, life characteristics and Coulombic efficiency.

## Description

### TECHNICAL FIELD

The present application claims the benefit of US Provisional Application No. 63/037,667 filed on June 11, 2020 and US Provisional Application No. 63/157,012 filed on March 5, 2021, the disclosure of which is incorporated herein by reference in its entirety. The present disclosure relates to a negative electrode for a solid state battery and a solid state battery comprising the negative electrode.

### BACKGROUND ART

The conventional lithium ion secondary battery uses a transition metal oxide-based positive electrode active material and a graphite-based negative electrode active material, and uses a liquid electrolyte to ensure lithium ionic conductivity between the positive electrode and the negative electrode.

Recently, there are increasing studies of high capacity negative electrode active material such as silicon (Si) as an alternative to the graphite-based negative electrode active material. Silicon (Si) has high electrical conductivity and exhibits higher capacity characteristics than the graphite-based active material, so when silicon (Si) is applied as the negative electrode active material, it is possible to achieve higher battery capacity and smaller battery size than the existing batteries including the carbon-based negative electrode.

However, silicon (Si) has a large volume change during charge/discharge, and as a consequence, fracture frequently occurs, and a new surface is exposed by the fracture, and when the surface contacts the liquid electrolyte, a solid electrolyte interphase (SEI) layer is formed on the surface, resulting in the reduced battery capacity. To mitigate the capacity fade, attempts have been made to add a variety of Si nanostructures to the silicon (Si) negative electrode in combination with carbon composites and a binder material to mitigate pulverization and Si prelithiation to compensate for Li loss. Alternatively, studies have been made to form LiF/LiOH/Li₂O using fluoroethylene carbonate (FEC) or other ionic liquid additive. However, despite these continuous studies, it is still difficult to enable stable cycling beyond 100 cycles in full cells and new approaches are needed. Additionally, to realize high energy density, it is necessary to study approaches to reduce the binder and carbon conductive additive ratios.

### DISCLOSURE

### Technical Problem

The present disclosure is directed to providing a solid state battery using silicon (Si) as a negative electrode active material. Additionally, the present disclosure is further directed to providing a solid state battery having good electrical and chemical properties including heat resistant stability, energy density, life characteristics and Coulombic efficiency. It will be readily appreciated that these and other objects and advantages of the present disclosure may be realized by means or methods described in the appended claims and a combination thereof.

### Technical Solution

A first aspect of the present disclosure relates to a solid state battery, and the solid state battery comprises a negative electrode, a positive electrode and a solid electrolyte membrane interposed between the negative electrode and the positive electrode, wherein the negative electrode comprises a negative electrode active material layer comprising silicon (Si) as a negative electrode active material, the silicon includes silicon particles, the negative electrode active material layer comprises the silicon (Si) in an amount of 90 wt% or more based on 100 wt% of the negative electrode active material layer, and the solid electrolyte membrane comprises a sulfide-based solid electrolyte.

A second aspect of the present disclosure relates to the solid state battery in the first aspect wherein the negative electrode active material layer comprises the silicon (Si) in an amount of 99 wt% or more based on100 wt% of the negative electrode active material layer.

A third aspect of the present disclosure relates to the solid state battery in the first aspect wherein the negative electrode active material layer comprises the silicon (Si) in an amount of 99.9 wt% or more based on 100 wt% of the negative electrode active material layer.

A fourth aspect of the present disclosure relates to the solid state battery in any one of the first to third aspects wherein the negative electrode comprises a current collector, and the negative electrode active material layer is formed on at least one surface of the current collector.

A fifth aspect of the present disclosure relates to the solid state battery in any one of the first to fourth aspects wherein the sulfide-based solid electrolyte comprises at least one selected from LPS-based glass or glass ceramic (*x*Li₂S.yP₂S₅), or argyrodite-based sulfide-based solid electrolyte (Li₆PS₅X; X = Cl, Br, I).

A sixth aspect of the present disclosure relates to the solid state battery in any one of the first to fifth aspects wherein the silicon (Si) particle has a particle size of 0.1*µ*m to 10*µ*m.

A seventh aspect of the present disclosure relates to the solid state battery in any one of the first to sixth aspects wherein the negative electrode active material layer has a porosity at a state before first charge/discharge cycle of 25 vol% to 65 vol%.

An eighth aspect of the present disclosure relates to the solid state battery in the seventh aspect wherein the negative electrode active material layer has a porosity before the cycle proceeds of 25 vol% to 40 vol%.

A ninth aspect of the present disclosure relates to the solid state battery in any one of the first to eighth aspects wherein the negative electrode has a porosity of less than 10 vol% at SOC of 70% to 100%.

A tenth aspect of the present disclosure relates to the solid state battery in any one of the first to ninth aspects wherein the silicon (Si) having a purity of 97% or more is introduced as the negative electrode active material.

An eleventh aspect of the present disclosure relates to the solid state battery in any one of the first to tenth aspects wherein the positive electrode comprises a positive electrode active material layer, the positive electrode active material layer comprises lithium transition metal composite oxide as a positive electrode active material, and the transition metal comprises at least one of Co, Mn Ni or Al.

A twelfth aspect of the present disclosure relates to the solid state battery in the eleventh aspect wherein the positive electrode active material layer further comprises at least one of a binder resin, a conductive material or a solid electrolyte.

A thirteenth aspect of the present disclosure relates to the solid state battery in the eleventh or twelfth aspect wherein the solid electrolyte comprises the sulfide-based solid electrolyte, and the sulfide-based solid electrolyte comprises at least one selected from LPS-based glass or glass ceramic (*x*Li₂S.yP₂S₅), or argyrodite-based sulfide-based solid electrolyte (Li₆PS₅X; X = Cl, Br, I).

A fourteenth aspect of the present disclosure relates to the solid state battery in any one of the eleventh to thirteenth aspects wherein the lithium transition metal composite oxide comprises at least one of compounds represented by the following Formula 1:

[Formula 1] LiₓNiₐCo_{b}Mn_{c}M_{z}O_{y}

where 0.5≤x≤1.5, 0<a≤1, 0≤b<1, 0≤c<1, 0≤z<1, 1.5<y<5, a+b+c+z is 1 or less, and M comprises Al.

A fifteenth aspect of the present disclosure relates to the solid state battery in the fourteenth aspect wherein the a is 0.5 or more.

A sixteenth aspect of the present disclosure relates to the solid state battery in the fourteenth or fifteenth aspect wherein the lithium transition metal composite oxide comprises LiNi_{0.8}Co_{0.1}Mn_{0.1}O₂.

A seventeenth aspect of the present disclosure relates to the solid state battery in any one of the twelfth to sixteenth aspects wherein the positive electrode active material layer is obtained by using the positive electrode active material, the conductive material, the binder resin and the solid electrolyte by a manufacturing method according to a dry mixing process without a solvent.

An eighteenth aspect of the present disclosure relates to the solid state battery in any one of the first to seventeenth aspects wherein the negative electrode active material layer comprises no conductive material.

A nineteenth aspect of the present disclosure relates to the solid state battery in any one of the first to eighteenth aspects wherein the negative electrode active material layer comprises no carbon-based conductive material.

A twentieth aspect of the present disclosure relates to the solid state battery in any one of the first to nineteenth aspects wherein the battery has an NP ratio of 0.1 to 30.0.

### Advantageous Effects

The solid state battery according to the present disclosure has high energy density due to the high amount of the negative electrode active material Si in the negative electrode. Additionally, the negative electrode exhibits the porous characteristics attributed to the pores by the space between Si particles before charge/discharge cycles, and the pores reduce the volume change of Si particles during charge/discharge. Additionally, using the Si negative electrode and the solid electrolyte, when fracture occurs in Si particles due to the volume change, a solid electrolyte interphase (SEI) layer is not formed on a new surface formed by the fracture, thereby preventing the loss of the active material and maintaining the battery capacity, as well as avoiding the impedance rise. With these features, the battery according to the present disclosure has good electrical and chemical properties including heat resistant stability, energy density, life characteristics and Coulombic efficiency.

### BRIEF DESCRIPTION OF THE DRAWINGS

The accompanying drawings illustrate a preferred embodiment of the present disclosure, and together with the detailed disclosure, serve to provide a further understanding of the technical aspects of the present disclosure, and the present disclosure should not be construed as being limiting to the drawings. In the drawings, for clarity of description, the shape, size, scale or proportion of the elements may be exaggerated for emphasis.
FIGS. 1a and 1b are diagrams showing a difference in solid electrolyte interphase (SEI) layer forming mechanism by the fracture of the negative electrode active material in the conventional liquid electrolyte battery (1a) and a solid electrolyte battery (1b) of the present disclosure.
FIG. 1c shows the lithiation mechanism of a negative electrode during cycles in the negative electrode of a solid state battery of the present disclosure.
FIG. 2 shows an X-ray diffraction pattern of a mixture of a sulfide-based solid electrolyte and Si powder.
FIGS. 3a and 3b are cross-sectional views of a solid state battery according to example 1-1, and they are scanning electron microscope (SEM) images showing the states before cycles (3a) and after cycles (3b).
FIG. 4a shows a digital image of a Si negative electrode according to example 1-1 of the present disclosure, and FIGS. 4b and 4c show SEM images at each magnification scale.
FIGS. 5a to 5c show Voltage profile (5a), cycle performance and average Coulombic efficiencies (5b) according to examples 1-1, 1-2 and 1-3 of the present disclosure and a charge/discharge profile (5c) at c/3 rate for the battery of example 1-1.
FIG. 6 shows voltage profile during initial lithiation of batteries of example 1-1 and comparative example 1.
FIG. 7 shows lithiated diffraction patterns of Si-Solid State Electrolytes (SSE) and lithiated Si-SSE of the battery of example 1-1 before cycles and lithiated diffraction patterns of comparative example 1.
FIGS. 8a to 8c show Si-SSE interface products using AXIS Supra X-ray photoelectron spectroscopy (XPS) (Kratos Analytical) in the batteries of example 1-1 and comparative example 1, and a difference between the presence and absence of carbon additive in the charging of the battery.
FIGS. 9a to 9c show the quantification of formed SEI and Li-Si using Titration Gas Chromatography (TGC) method in the battery of example 1-1.
FIGS. 10a to 10d show a comparison in life characteristics between the battery of example 1-1 and the battery of comparative example 2.
FIG. 11 shows the storage characteristics in room temperature and high temperature conditions of example 1-1 and comparative example 2.
FIGS. 12a to 12d show the measured electrochemical impedance spectroscopy (EIS) of the battery of example 1-1.
FIGS. 13a and 13b show charge/discharge graphs of the batteries according to example 2 and comparative example 3 of the present disclosure.
FIGS. 14a to 14d are SEM images of a positive electrode manufactured by a dry method in example 1-1.
FIGS. 15a to 15c show EDS images of a positive electrode manufactured in example 1-1.
FIG. 16 shows Areal capacity as a function of rate change in the battery manufactured in example 1-1.
FIG. 17 shows the changes in Areal capacity and Coulombic efficiency of the battery manufactured in example 1-1 at 1C during 30 cycles.

### DETAILED DESCRIPTION

Hereinafter, the present disclosure will be described in detail. Prior to the description, it should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation. Therefore, the embodiments described herein and the elements shown in the drawings is just a most preferred embodiment of the present disclosure, but not intended to fully describe the technical aspects of the present disclosure, so it should be understood that other equivalents and modifications could have been made thereto at the time the application was filed.

The term ^{┌}comprise(s)_{┘} or ^{┌}include(s)_{┘} when used in this specification, specifies the presence of stated elements, but does not preclude the presence or addition of one or more other elements, unless the context clearly indicates otherwise.

The terms ^{┌}about_{┘} and ^{┌}substantially_{┘} are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

^{┌}A and/or B_{┘} when used in this specification, specifies ^{┌}either A or B or both_{┘} .

The present disclosure relates to a solid state battery comprising a solid electrolyte material as an electrolyte. Specific examples of the solid state battery include any type of primary battery, secondary battery, fuel cell, solar cell or capacitor such as a super capacitor. In particular, the secondary battery is, to be specific, a lithium ion secondary battery.

In an embodiment, the solid state battery according to the present disclosure comprises a negative electrode, a positive electrode and a solid electrolyte membrane interposed between the negative electrode and the positive electrode, and the negative electrode comprises a negative electrode active material layer including silicon (Si) as a negative electrode active material.

When lithium metal is used for the negative electrode, the energy density is high and life characteristics are long, but when the operating temperature is low, lithium dendrite growth is aggravated and battery performance degrades. However, the Si negative electrode has no risk of lithium dendrite growth and may exhibit good performance at room temperature, and thus is more advantageous than the lithium metal negative electrode. Meanwhile, in batteries using liquid electrolytes, the Si negative electrode exhibits high rate charging characteristics at low operating temperatures (for example, room temperature or less), while has low reversible areal capacities. In the case of liquid electrolyte batteries, it is not easy to introduce a high loading electrode. The battery according to the present disclosure can solve the above-described problem.

Hereinafter, the configuration and effect of the present disclosure will be described in detail.

In the present disclosure, the silicon includes silicon particles. The silicon (Si) particle may have a diameter of 0.1*µ*m to 10*µ*m, and preferably 3*µ*m to 5*µ*m. Within the above-described range, it is advantageous in terms of negative electrode manufacturing process and thickness uniformity of the negative electrode.

In an embodiment of the present disclosure, the negative electrode active material layer may include the silicon (Si) in an amount of 90 wt% or more, 99 wt% or more or 99.9 wt% or more based on 100 wt% of the negative electrode active material layer. Meanwhile, in an embodiment of the present disclosure, it is preferable to introduce the silicon (Si) having the purity of 97% or more as the negative electrode active material. When the purity of the silicon (Si) satisfies the above-described range, it is advantageous in terms of initial irreversible reaction decrease and cell energy density improvement. Additionally, the negative electrode active material occupies most of the negative electrode composition in the negative electrode, so it is advantageous to obtain a homogeneous high loading electrode in terms of composition.

In a particular embodiment of the present disclosure, it is preferred that the negative electrode active material layer has no conductive material. In particular, it is preferable to exclude the use of a carbon-based conductive material such as carbon black. When the conductive material is included in the negative electrode active material layer, the irreversible decomposition reaction of the solid electrolyte is accelerated, which degrades the resistance characteristics and life performance of the battery.

Additionally, it is preferred that the negative electrode active material layer according to the present disclosure comprises a smaller amount of solid electrolyte, preferably no solid electrolyte. Since the negative electrode active material layer of the present disclosure has a high amount of silicon (Si) and volume changes during charging/discharging, in terms of interfacial contact maintenance, the negative electrode active material layer comprises a small amount of solid electrolyte, and preferably no solid electrolyte.

In an embodiment of the present disclosure, the negative electrode active material layer may include Si alone or Si in combination with a binder resin, and in this instance, the binder resin may be included in an amount of less than 10 wt%, less than 1 wt% or less than 0.1 wt% based on 100 wt% of the negative electrode active material layer.

The negative electrode may comprise a negative electrode current collector, and in this instance, the negative electrode active material layer may be formed on at least one surface of the current collector. In an embodiment of the present disclosure, the negative electrode active material layer may range from about 10*µ*m to 100*µ*m in thickness, and for example, may be formed with the thickness of 10*µ*m to 70*µ*m or 10*µ*m to 50*µ*m.

In an embodiment of the present disclosure, the porosity of the negative electrode active material layer before initial charge/discharge cycles may be 25 vol% to 65 vol%, and preferably 25 vol% to 40 vol%. Meanwhile, the negative electrode active material layer may be 10*µ*m to 50*µ*m thick.

The pores refer to interstitial volume formed by spaces between silicon (Si) particles, and the negative electrode active material layer has a porous structure resulting from the interstitial volume.

The porous structure of the negative electrode active material layer has an important technical significance in reducing the volume expansion of the negative electrode according to the present disclosure.

The negative electrode active material layer forms a Li-Si alloy phase and has volume expansion during charging, and expands the volume into its own pores, so the porosity may significantly reduce during charging. In an embodiment of the present disclosure, the negative electrode active material layer may have the porosity of 10 vol% or less in the range of SOC 90% to SOC 100%.

The pore size or distribution may be different from those before the initial cycle, but the volume occupied by the pores may be equally maintained.

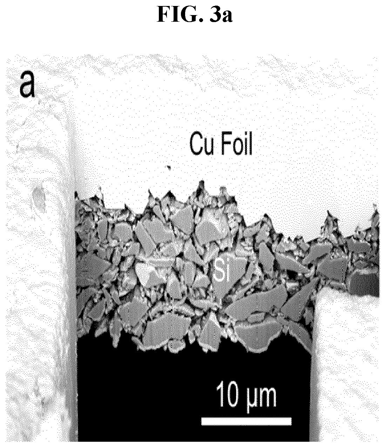

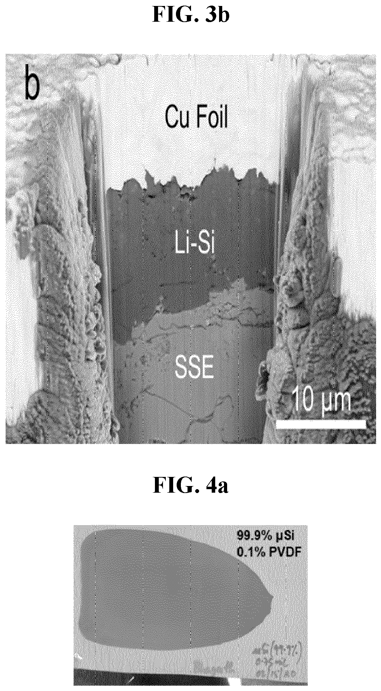

Hereinafter, FIGS. 3a and 3b show the state of the negative electrode before charge/discharge cycles (3a) and after charge/discharge cycles (3b) in the negative electrode according to the present disclosure. Referring to FIG. 3a, before charge/discharge cycles, the negative electrode exhibits the porous properties due to the pores between each particle. The pore size is dependent on the particle size of the negative electrode active material, and according to the drawing, the pore size is found to be about 3*µ*m to about 5*µ*m. When the negative electrode is lithiated during charge/discharge cycles, the volume expands to the pores, the pore volume reduces, and it turns to silicon metal lithiated at high density (FIG. 3b). The negative electrode has the limited expansion to a direction (Z-axis direction) perpendicular to the thicknesswise direction of the negative electrode. This prevents excessive stress from being applied to the solid electrolyte membrane and prevents the cracking-induced battery performance degradation.

In an embodiment of the present disclosure, the negative electrode active material layer may be manufactured, for example, by the following method.

In an embodiment of the present disclosure, the negative electrode active material layer may be obtained by adding silicon powder to a solvent and dispersing to prepare a slurry, applying the slurry to an appropriate negative electrode current collector and drying. Meanwhile, a predetermined pressure of, for example, about 370 MPa may be applied to adjust the thickness and porosity of the dried result. The porosity may be appropriately adjusted to the above-described level. The solvent may further comprise a binder resin and the amount of the binder resin may be adjusted to an amount of less than 10 wt%, less than 1 wt% or less than 0.1 wt% based on 100 wt% of the finally obtained negative electrode active material layer. The method of applying the pressure is not limited to a particular one, and well-known methods of applying the pressure may be selectively applied.

The solvent may include, for example, NMP, but is not particularly limited thereto, and may include any solvent that does not affect the electrical and chemical properties of silicon (Si).

Specifically, the negative electrode may be manufactured by the following method. Silicon (Si) powder is dispersed in N-Methyl-2-pyrrolidone comprising 0.1wt% poly(vinylidene difluoride), the dispersion is mixed using a mixer until a slurry is formed and the slurry is applied to the current collector. The result is dried under vacuum at 80°C. For example, the target porosity of the negative electrode may be set to about 33%.

The solid electrolyte membrane comprises a solid electrolyte, and the solid electrolyte may comprise a sulfide-based solid electrolyte. The sulfide-based solid electrolyte may contain sulfur (S) and have the ionic conductivity of metal belonging to Group I or II in the periodic table, and may comprise Li-P-S-based glass, Li-P-S-based glass ceramic and argyrodite-based sulfide-based solid electrolyte. Non-limiting examples of the sulfide-based solid electrolyte may include at least one of xLi₂S-yP₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂ or Li₂S-GeS₂-ZnS, Li6PS5X (X = at least one of Cl, Br or I). In an embodiment of the present disclosure, the sulfide-based solid electrolyte may comprise at least one selected from LPS-based glass or glass ceramic such as xLi₂S-yP₂S₅, or an argyrodite-based sulfide-based solid electrolyte (Li₆PS₅X; X = Cl, Br, I).

In the present disclosure, the average particle size of the sulfide-based solid electrolyte may be adjusted to an appropriate range for the solid state battery. In a particular embodiment of the present disclosure, the solid electrolyte may have an average particle size of 0.1 *µ*m to 50 *µ*m. Additionally, in an embodiment of the present disclosure, the selected solid electrolyte has the ionic conductivity of 1×10⁻⁵ S/cm, preferably 1×10⁻³ S/cm or more.

In an embodiment of the present disclosure, the solid electrolyte membrane may be manufactured, for example, by the following method.

First, a solid electrolyte is prepared. The solid electrolyte may be prepared by obtaining from commercially available products or manufacturing by the following method. The solid electrolyte may be manufactured by the following method. First, LiCl, Li₂S and P₂S₅ are mixed in stoichiometric amounts, and milled by a planetary ball milling method to obtain a homogenous mixture. The mixture may be thermally treated at high temperature for a predetermined time to obtain the intended LiePSsCl solid electrolyte. The thermal treatment may be performed at about 550°C and the thermal treatment time may be about 8 hours.

Subsequently, the solid electrolyte material is added to a predetermined organic solvent and dispersed to prepare a slurry, the slurry is applied to a release plate and dried to form a sheet shape. If necessary, the result of the sheet shape may be pressed to obtain a solid electrolyte membrane.

In an embodiment of the present disclosure, the positive electrode may comprise a positive electrode active material layer comprising a positive electrode active material, a positive electrode conductive material and a solid electrolyte. The positive electrode active material layer may further comprise a binder resin for the positive electrode if necessary. Additionally, the positive electrode comprises a current collector if necessary, and the positive electrode active material layer may be positioned on at least one surface of the current collector.

In an embodiment of the present disclosure, the positive electrode active material may comprise at least one of lithium cobalt oxide (LiCoO₂), lithium nickel oxide (LiNiO₂), lithium manganese oxide of Formula Li₁₊ₓMn₂₋ₓO₄ (x is 0 to 0.33, for example LiMn₂O₄), LiMnO₃, LiMn₂O₃, LiMnO₂, lithium copper oxide (Li₂CuO₂); vanadium oxide such as LiVsOs, LiV₂O₄, V₂O₅, Cu₂V₂O₇, Ni-site lithium nickel oxide represented by Formula LiNi₁₋ₓMₓO₂ (M = Co, Mn, Al, Cu, Fe, Mg, B or Ga, 0<x<1), for example, LiNi_{1-z}(Co,Mn,Al)_{z}O₂ (0<z<1); lithium manganese composite oxide represented by Formula LiMn₂₋ₓmₓO₄ (M = Co, Ni, Fe, Cr, Zn or Ta, x = 0.01 ~ 1, for example, LiMn_{1.5}Ni_{0.5}O₄ or Li₂Mn₃MO₈ (M = Fe, Co, Ni, Cu or Zn); LiMn₂O₄ with partial substitution of alkali earth metal ion for Li in Formula; disulfide compounds; Fe₂(MoO₄)₃, or lithium iron phosphate (LiFePO₄). In an embodiment of the present disclosure, the lithium iron phosphate may have all or at least part of the of the active material particle surface coated with a carbon material to improve conductivity.

Preferably, the positive electrode active material may comprise at least one selected from Lithium Nickel Cobalt Manganese Oxide (for example, Li(Ni,Co,Mn)O₂, LiNi_{1-z}(Co,Mn,Al)_{z}O₂ (0<z<1)), Lithium Iron Phosphate (for example, LiFePO4/C), Lithium Nickel Manganese Spinel (for example, LiNi_{0.5}Mn_{1.5}O₄), Lithium Nickel Cobalt Aluminum Oxide (for example, Li(Ni,Co,Al)O₂), Lithium Manganese Oxide (for example, LiMn₂O₄) and Lithium Cobalt Oxide (for example, LiCoO₂).

In the present disclosure, most preferably the positive electrode active material may comprise lithium transition metal composite oxide, and the transition metal may comprise at least one of Co, Mn Ni or Al.

In an embodiment of the present disclosure, the lithium transition metal composite oxide may comprise at least one of compounds represented by the following formula 1.

[Formula 1] LiₓNiₐCo_{b}Mn_{c}M_{z}O_{y}

In the above Formula 1, 0.5≤x≤1.5, 0<a≤1, 0≤b<1, 0≤c<1, 0≤z<1, 1.5<y<5, a+b+c+z is 1 or less, and M may comprise at least one selected from Al, Cu, Fe, Mg and B.

In an embodiment of the present disclosure, the positive electrode active material preferably includes a positive electrode active material having high Ni content of a of 0.5 or more, and its specific example may comprise LiNi_{0.8}Co_{0.1}Mn_{0.1}O₂.

In a particular embodiment of the present disclosure, the positive electrode conductive material may be, for example, at least one conductive material selected from the group consisting of graphite, carbon black, carbon fibers or metal fibers, metal powder, conductive whiskers, conductive metal oxide, activated carbon or polyphenylene derivatives. More specifically, the positive electrode conductive material may be at least one conductive material selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide.

The current collector is not limited to a particular type and may include those having high conductivity without causing a chemical change in the corresponding battery, for example, stainless steel, copper, aluminum, nickel, titanium, sintered carbon, or aluminum or stainless steel treated with carbon, nickel, titanium and silver on the surface.

The positive electrode binder resin may include polymer for electrode commonly used in the technical field. Non-limiting examples of the binder resin may include, but are not limited to, polyvinylidene difluoride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose.

In an embodiment of the present disclosure, the solid electrolyte included in the positive electrode may comprise at least one selected from a polymer-based solid electrolyte, an oxide-based solid electrolyte and a sulfide-based solid electrolyte. In an embodiment of the present disclosure, preferably the positive electrode active material may comprise the sulfide-based solid electrolyte described in the solid electrolyte membrane.

In an embodiment of the present disclosure, the positive electrode active material is preferably included in the positive electrode in an amount of 70 wt% or more based on 100 wt% of the positive electrode active material layer. Additionally, the solid electrolyte is preferably included in the positive electrode in an amount of 10 wt% to 30 wt% based on 100 wt% of the positive electrode active material layer.

Meanwhile, in a particular embodiment of the present disclosure, the positive electrode may have a loading amount (per electrode area) of 5 mAh/cm² or more, 6 mAh/cm² or more, or 10 mAh/cm² or more. In the battery according to the present disclosure, when the high loading positive electrode is applied, it is possible to operate the battery on the electrochemically stable level.

Meanwhile, in a particular embodiment of the present disclosure, the positive electrode active material layer may be obtained by adding the positive electrode active material, the conductive material, the binder resin and the solid electrolyte to an appropriate solvent to prepare a slurry and casting the slurry, or may be obtained by a manufacturing method according to a dry mixing process without a solvent. Meanwhile, in an embodiment of the present disclosure, it is possible to achieve the uniform mixing of the positive electrode materials in the positive electrode, thereby obtaining a high loading positive electrode, and in this aspect, the positive electrode is preferably obtained by the dry mixing process using no solvent.

The method of manufacturing the positive electrode active material layer by the dry mixing method may be described, for example, as below. First, the positive electrode materials comprising the positive electrode active material, the conductive material and the binder resin are put into a mixing device and mixed by a mechanical method to obtain a mixture. The mixing device includes any type of device that can form a comparatively homogeneous mixture phase such as a well-known mixer agitator, and is not limited to a particular type of device. Meanwhile, in an embodiment of the present disclosure, to improve the dispersion of solids and induce the fibrous form of the binder resin in the mixing process, a temperature rising process may be included. In the temperature rising process, the temperature may be appropriately controlled in the range of about 30°C to 100°C. Subsequently, the positive electrode active material layer may be formed by extracting the mixture into the shape of an electrode (a wide film shape) using an extruder, and adjusting the thickness through a pressing process. The positive electrode active material layer may be applied to the electrode with no current collector, or if necessary, the current collector may be attached to the obtained positive electrode active material layer to prepare the positive electrode including the current collector.

The positive electrode active material may include, for example, commercially available NMC811 positive electrode material. Meanwhile, if necessary, all or at least part of the particle surface of the positive electrode material may be coated with boron or niobium-based protective coating layers. The coating may use a dry method or a sol-gel method, but is not particularly limited to any one method. A positive electrode composition comprising the positive electrode active material, the conductive material, the solid electrolyte and the binder resin as prepared is manufactured, placed in a mold and pressed to form into a sheet shape. When the positive electrode is manufactured by the dry method, it is possible to achieve a more homogeneous mixture phase of the positive electrode components, and give uniform electrical and chemical properties all over the positive electrode.

Meanwhile, in an embodiment of the present disclosure, the solid state battery according to the present disclosure may be manufactured, for example, by the following method. As described above, the negative electrode, the solid electrolyte membrane and the positive electrode are prepared, stacked in that order and subjected to pressure to obtain a battery. In this instance, for example, metallic plungers enclosed in a polyetheretherketone (PEEK) die or any other insulative holder may be used.

Meanwhile, in a particular embodiment of the present disclosure, the solid state battery according to the present disclosure may have the NP ratio ranging from 0.1 to 30. Within the above-described range of NP ratio, stable and constant electrical and chemical properties are provided. The NP ratio may range, for example, from 0.5 to 10, from 0.8 to 10, from 1.0 to 10, or from 1.0 to 5, and the NP ratio ranging from 1.0 to 1.5 is advantageous in terms of battery energy density.

The solid state battery according to the present disclosure does not comprise a carbon material solid electrolyte such as a conductive material in the negative electrode active material layer and comprises the controlled minimum amount of binder, and thus comprises the increased amount of the negative electrode active material silicon (Si) in the negative electrode active material layer, resulting in improved energy density.

The solid state battery according to the present disclosure forms strong passivation solid electrolyte interphase (SEI) at the initial charge/discharge cycle to physically block the unreacted solid electrolyte and the silicon surface when a new surface is formed by fracture in silicon due to the charge/discharge and volume changes, thereby avoiding electrolyte decomposition, and eliminates or controls the use of conductive material, solid electrolyte and binder in the negative electrode to the minimum level, resulting in the increased amount of the negative electrode active material silicon (Si) in the negative electrode. As a result, the solid state battery according to the present disclosure can solve the capacity degradation and cycle life reduction problems occurring in the conventional liquid electrolyte battery.

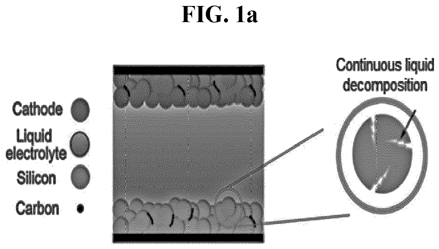

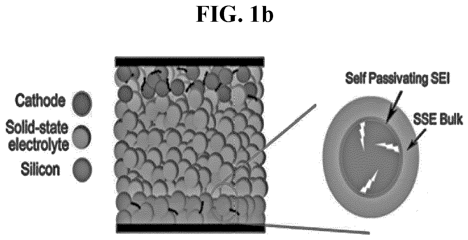

FIG. 1a is a diagram showing the conventional liquid electrolyte system and the electrolyte system of the present disclosure. The conventional liquid electrolyte battery has continuous SEI formation due to the decomposition of the electrolyte solution at a new interface, leading to capacity loss. However, the battery system of the present disclosure uses the solid electrolyte, thereby preventing the electrolyte decomposition as in the liquid electrolyte.

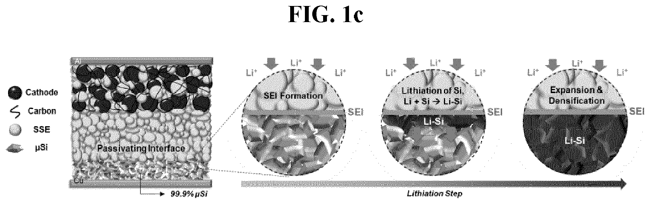

Meanwhile, FIG. 1c details the lithiation mechanism of the negative electrode in the solid state battery of the present disclosure. According to FIG. 1c, the battery according to the present disclosure is characterized in that 1) passivating SEI is formed between the negative electrode and the solid electrolyte membrane during lithiation and silicon particles close to the interface are lithiated, 2) lithium ions diffuse from lithiated silicon particles to non-lithiated silicon particles, and 3) the reaction is performed over the negative electrode to form a Li-Si layer.

Additionally, the solid state battery according to the present disclosure ensures heat resistant stability compared to the conventional lithium ion battery (LIB) using liquid electrolyte. Meanwhile, the solid state battery according to the present disclosure comprises a bulk type of negative electrode having high silicon content and has much higher battery capacity than a thin film type of negative electrode synthesized by a sputtering or vapor deposition method. Additionally, as described above, the negative electrode is manufactured by a straightforward method, so it is possible to provide a high cost saving effect and achieve the mass production level of processsbility.

The advantages of the solid state battery according to the present disclosure will be described in detail as below.
- High silicon composition fraction: Conventional silicon negative electrodes in liquid electrolyte batteries often include silicon nano or micro particles, carbon additives and polymeric binders, with most reporting a silicon weight ratio of about 50%, few reports can exceed 70% weight fraction while achieving more than 100 cycles of cell performance in the full cell. The solid state battery according to the present disclosure may achieve more than 99.9% of silicon weight fraction in the negative electrode, eliminating or minimizing the use of carbo-based conductive material, solid electrolyte and binder resin. This electrode can cycle more than 100 cycles in a full cell with low NP ratio and with more than 90% capacity retention. To achieve more than 99.9 wt% of silicon weight fraction in the negative electrode and control the loading amount for matching of the intended NP ratio, it is preferable to use silicon particles of micron level and it is necessary to disperse them in an organic solvent together with minor binder components. For example, the binder components may be present in negative electrode in an amount of less than 0.1%. Meanwhile, even with almost no binder component, the silicon negative electrode remains in good contact with the current collector and can be applied to the solid state battery. Meanwhile, to reduce the porosity of the negative electrode and achieve high electrode packing density, the negative electrode needs to be calendered to at least 370 MPa before integration into the battery. As silicon expansion occurs up to 300%, the ideal porosity of the negative electrode is about 33% to minimize the volume change of the battery during charge/discharge. In the battery according to the present disclosure, since the negative electrode has the above-described porosity range, when volume expansion of the negative electrode occurs during the charge/discharge of the battery, the negative electrode would expand into its own pores, avoiding mechanical fracture at the interface between the solid electrolyte and the negative electrode.
- Interface stabilization: The primary source for battery performance degradation in conventional liquid electrolyte batteries using silicon negative electrode is continuous SEI formation as a result of reduction of the electrolyte solution during exposure to fresh surfaces during cycling. The present disclosure directly addresses this problem by using a sulfide-based solid electrolyte that exhibits passivating SEI nature, preventing continuous electrolyte decomposition and SEI formation after the first cycle. This prevents loss of active material, retaining battery capacity and also reduces impedance growth over time. As not all sulfide-based solid electrolytes are compatible with silicon negative electrodes, careful selection of the sulfide-based solid electrolyte material should be done in order to ensure passivating nature of its SEI. This is done by studying the electrochemical stability window of a range of sulfide-based solid electrolytes and identifying their reduction product species. In general, there are two types of interfaces between solid electrolytes and silicon negative electrode: ionically conductive and mixed conductive ones. The ionically conductive interfaces only comprise ionically conductive products and insulators. The mixed conductive interfaces comprise ionically conductive and electrically conductive products. A passivating interface should be one formed from a solid electrolyte that forms only ionically conductive interfaces with no electrically conductive component.
- High energy and power density: Conventional silicon secondary batteries using liquid electrolytes are unable to achieve high energy due to excessive inactive materials in the electrode. Due to the absence of excessive inactive materials in the negative electrode, the secondary battery according to the present disclosure achieves high packing density of silicon, allowing low porosity and electrodes with low thickness to enable high power density due to its low resistance. The negative electrode according to the present disclosure allows for high specific capacity and high energy density per volume due to lower battery volume compared with the negative electrode of the conventional liquid electrolyte battery. Due to the alloying mechanism of silicon with lithium ions, compared with plating or intercalation mechanism in conventional lithium metal or carbon-based negative electrodes, the present disclosure greatly reduces the risks of lithium dendrite growth. Compared with low alloy overpotential of thin and dense electrodes, the solid state battery of the present disclosure may have high rate capability and power density. When compared with a thin solid electrolyte membrane and high loading transition metal oxide positive electrodes, lower N/P ratios can be used to reduce the excess mass in the batteries, increasing overall energy density. Additionally, the present disclosure adopt large stacking formats, reducing the dead weight of inactive components such as packing, and liquid electrolyte excess, further increasing the specific and volumetric energy density.

Hereinafter, the present disclosure will be described in more detail through examples, but the following examples are intended to describe the present disclosure for illustrative purposes, and the scope of the present disclosure is not limited thereto. The examples of the present disclosure are provided to describe the present disclosure to those skilled in the art fully and completely.

### [Example]

Since a sulfide-based material is sensitive to air and humidity, it decomposes to produce toxic gas such as H₂S, so all the synthesis and test steps are performed in a glove box (MBraun MB 200B, H₂O <0.5 ppm, O₂ < 5.0 ppm) filled with argon.

### 1. Manufacture of battery

### Example 1-1

### 1) Manufacture of negative electrode

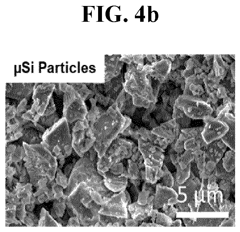

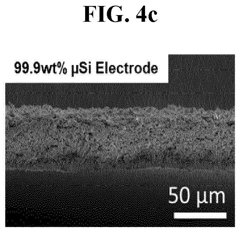

Si powder (Alfa Aesar, particle size 3*µ*m to 5*µ*m) is added to a solution of 0.1 wt% of PVDF (Kynar (HSV-900)) in N-Methyl-2-Pyrrolidone and mixed to prepare a negative electrode forming slurry. The concentration of the slurry is about 25 wt%, and a weight ratio of the Si powder and the PVDF is 99.1:0.1. The slurry is applied to a copper thin film (10*µ*m thick) using a doctor blade. This is dried overnight under vacuum at 80°C to remove the solvent, and cut into a disc shape to obtain a negative electrode. The obtained negative electrode has a thickness of 45,um and a loading amount of 13.2 mAh/cm². Additionally, digital images and scanning electron microscope (SEM) images of the obtained negative electrode are shown in FIGS. 4a to 4c.

### 2) Manufacture of positive electrode

NCM811 (LG Chem, LiNi_{0.8}Co_{0.1}Mn_{0.1}O₂), Li₆PS₅Cl (NEI Corporation), VGCF (Sigma Aldrich (Graphitized, Iron-free)) and Polytetrafluoroethylene (PTFE, Dupont) are mixed at a weight ratio of (78 : 19.5 : 2 : 0.5) and dry mixed in a heated mortar, followed by hot rolling using a stainless steel cylinder to adjust the thickness. This is cut into a proper shape to obtain a positive electrode. The obtained positive electrode has a thickness of 240,um and a loading amount of 12.0 mAh/cm².

Meanwhile, the NCM811 has boron coating on the surface. Additionally, the LiePSsCl is prepared by pre-milling in a 45 ml ZrO₂ ball mill jar (Emax, Retsch). The jar is filled with argon gas, and a wet milling method using anhydrous xylene as a dispersion medium is applied. The milling is performed at the rate of about 300 rpm at room temperature for 2 hours. Subsequently, the LiePSsCl is taken out of the jar and dried overnight under vacuum at 80°C, and the dried result is fed into the dry manufacturing process of the positive electrode.

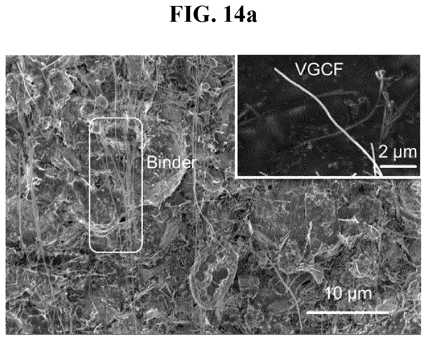

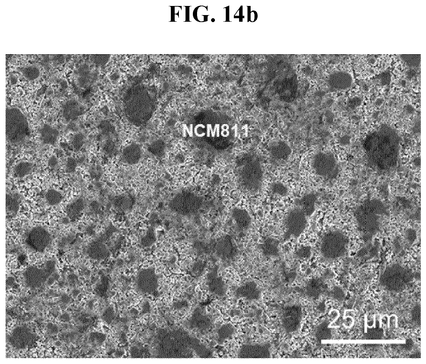

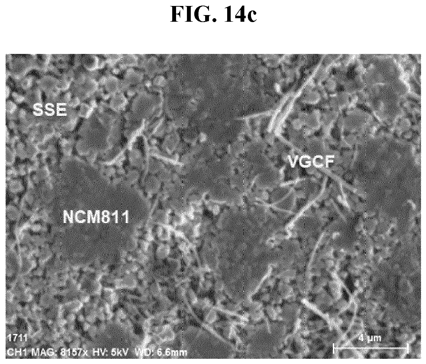

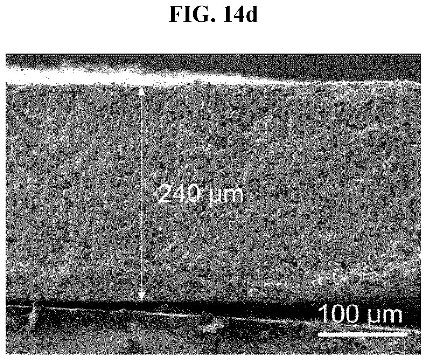

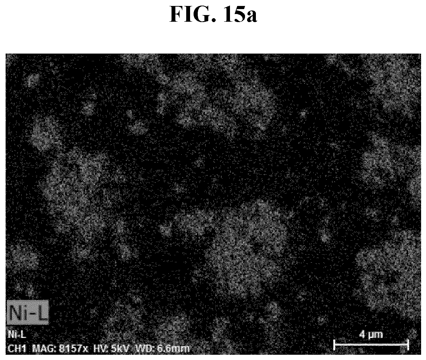

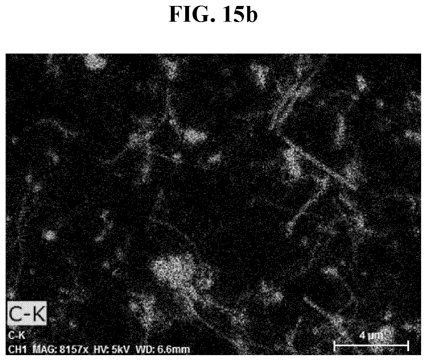

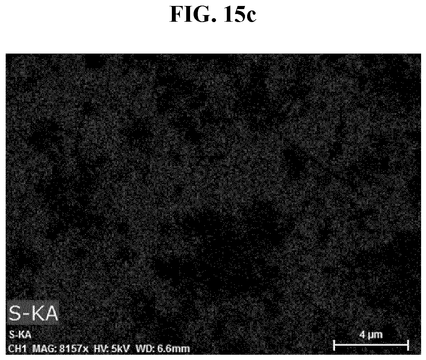

FIG. 14 is a SEM image of the obtained positive electrode. FIGS. 14a to 14c are top views at each scale, and FIG. 14d is a cross-sectional view. FIGS. 15a to 15c show EDS images. It is found that the positive electrode active material, the conductive material and the solid electrolyte do not agglomerate and exhibit a homogeneous dispersed phase.

### 3) Manufacture of solid electrolyte membrane

75 mg of Li₆PS₅Cl (NEI Corporation) is pressed between two titanium rods under the pressure of 370 MPa to form a 700,um thick solid electrolyte membrane.

### 4) Manufacture of battery

The negative electrode, the solid electrolyte membrane and the positive electrode as prepared are subjected to the pressure of 370 Mpa using a titanium plunger to manufacture a battery. The titanium plunger is used as a current collector. In the battery, the NP ratio is 1.1.

### Example 1-2

A battery is manufactured by the same method as example 1-1 except that the thickness of the positive electrode is 110 *µ*m, the loading amount is 5.5 mAh/cm² and the NP ratio is 2.4.

### Example 1-3

A battery is manufactured by the same method as example 1-1 except that the thickness of the positive electrode is 24 *µ*m, the loading amount is 0.5 mAh/cm² and the NP ratio is 26.0.

### Example 2

The negative electrode manufactured in example 1-1 and a lithium metal counter electrode are used, and a solid electrolyte layer is interposed between the negative electrode and the lithium metal counter electrode to manufacture a half cell battery. The solid electrolyte layer is the same as the solid electrolyte layer of example 1-1.

### Comparative example 1

Si powder (Alfa Aesar, particle size 3*µ*m to 5*µ*m) and a conductive material (carbon black. STREM Chemicals) are added to a solution of 0.1 wt% of PVDF (Kynar (HSV-900)) in N-Methyl-2-Pyrrolidone and mixed to prepare a negative electrode forming slurry. The concentration of solids in the slurry is about 25 wt%. In the slurry, the Si powder, the carbon black and the binder resin are mixed at a weight ratio of 79.92:19.98:0.1. The slurry is applied to a copper thin film (10*µ*m thick) using a doctor blade. This is dried overnight under vacuum at 80°C to remove the solvent, and pressed under the pressure of 370 MPa so that the porosity is 33%. Subsequently, this is cut into a disc shape to obtain a negative electrode.

A positive electrode and a solid electrolyte membrane are prepared by the same method as example 1-1.

The negative electrode, the solid electrolyte membrane and the positive electrode as prepared are pressed under the pressure of 370 Mpa using titanium plungers to manufacture a battery. The titanium plunger is used as a current collector. In the battery, the NP ratio is 1.1.

### Comparative example 2

A negative electrode is prepared by the same method as example 1-1. A positive electrode is manufactured by adding NCM811 (LG Chem, LiNi_{0.8}Co_{0.1}Mn_{0.1}O₂), a conductive material (carbon black. STREM Chemicals), PVDF (Kynar (HSV-900)) to N-Methyl-2-Pyrrolidone at a ratio of 97:1.5:1.5 and mixing to prepare a slurry, followed by coating the slurry on an Al foil (thickness 15*µ*m) and drying the solvent.

The negative electrode and the positive electrode are stacked with a separator interposed between and laminated to manufacture an electrode assembly. For the separator, a polyethylene porous film (thickness 15*µ*m, porosity 33 vol%) is used. The electrode assembly is placed in a coin cell and a liquid electrolyte is injected to manufacture a battery. In the battery, the NP ratio is 1.1. The electrolyte solution is prepared using 1M LiPF₆ in a mixed solution of ethylene carbonate (EC) and ethylmethylcarbonate (EMC) at a volume ratio of 3:7.

### Comparative example 3

A battery is manufactured by the same method as comparative example 2 except that lithium metal is used for the negative electrode.

### 2. Evaluation results

### (1) Voltage profile

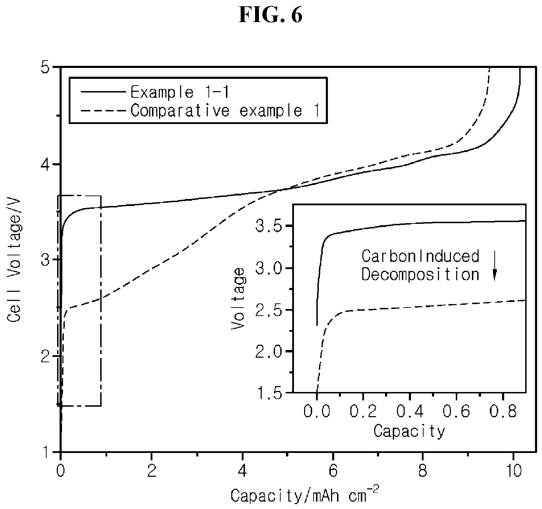

FIG. 6 shows voltage profiles of the batteries of example 1-1 and comparative example 1 during the initial lithiation. The battery of example 1-1 using no conductive material in the negative electrode shows the initial voltage plateau range at about 3.5V, but the battery of comparative example 1 shows the plateau range at 2.5V that is lower than the battery of example. It can be seen that the solid electrolyte is decomposed before 3.5V of lithiation potential.

### (2) Decomposition of solid electrolyte (1)

XRD is performed under the condition of Cu Kα radiation (λ=1.54178Å), 2θ (5-70°, 0.01° step size). In general, pristine electrode and repeatedly charge/discharged electrode are taken from the batteries, milled using agate mortar and pestle and put into a measurement device, and argon gas is fed. The peak of Li₂S and LiePSsCl is identified using inorganic crystal structure database (ICSD).

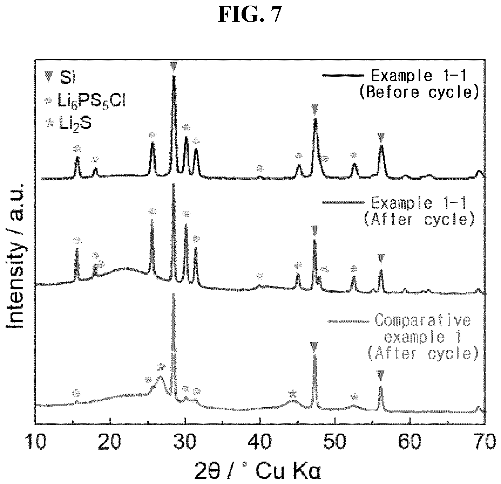

FIG. 7 shows the lithiated diffraction pattern of Si-solid electrolyte (Si-SSE) and lithiated Si-SSE of the battery of example 1-1 and lithiated diffraction pattern of comparative example 1 before cycles.

According to FIG. 7, the lithiated Si-SSE sample of example 1-1 maintains the crystallinity structure of the solid electrolyte (SSE), and shows amorphous Li-Si peak in the proximity of about 20°. Although SEI was expected, it is difficult to detect a small amount of SEI formed at the interface using this bulk technique. However, a diffraction signal of most of SSE before cycles is not observed in the battery of comparative example 1, and this shows that severe electrolyte decomposition occurred. It seems that in this process, nanocrystalline Li₂S is formed as the key by-product of electrolyte decomposition, and its wide peak is observed in the proximity of about 26°, 45° and 52°.

### (3) Decomposition of solid electrolyte (2)

Si-SSE interface products are identified using AXIS Supra X-ray photoelectron spectroscopy (XPS) (Kratos Analytical), and it is found that there is a difference between the presence and absence of the carbon additive in the charging of the battery. In example 1-1 and comparative example 1, the binding energy of the mixture at lithium 1s, sulfur 2p and silicon 2p regions after charge (charge state) is compared with silicon-LiePSsCl before charge (pristine state). The XPS spectrum is collected using the emission current of 5 mA and 700*µ*m × 300*µ*m. The spectrum is analyzed using CasaXPS software.

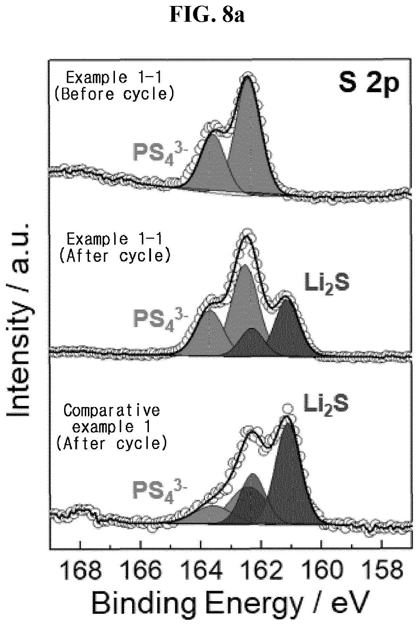

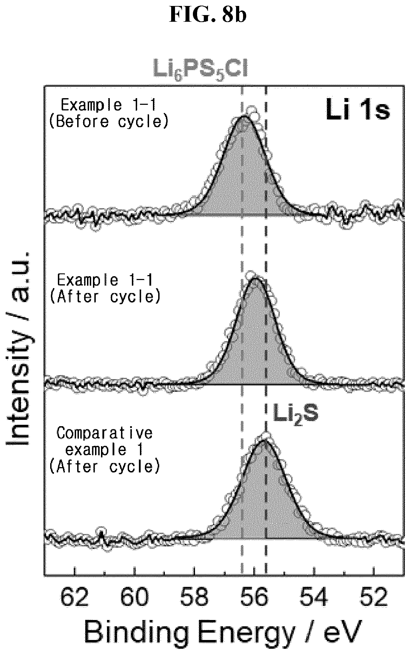

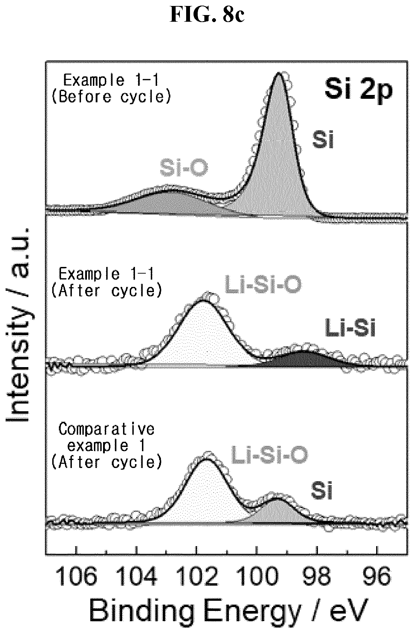

When carbon is included, it is found that the extent of decomposition of the solid electrolyte increases from formation of Li₂S (161 eV) at S 2p. A significant reduction in the peak intensity of PS4³⁻ is observed in the battery of comparative example 1 compared to the battery of example 1-1 (as shown in FIGS. 8a to 8c below). Since Li 1s region has a variety of Li+, it is difficult to identify the peak, but shift to low binding energy is observed due to the partial reduction of the solid electrolyte after charge. In the case of example 1-1, the shift is not large, but in the case of comparative example 1, Li₂S signal is dominant at about 55.6 eV. It can be seen that the conventional XRD result is confirmed. Meanwhile, in the Si 2p region, a natural oxide layer is observed near Si particle surface. During the charge of the battery, the signal shifts to lower binding energy, resulting in lithiation. The peak of binding energy corresponding to Li-Si is found in example 1-1, and in comparative example 1, Si does not react and remains. Presumably, in comparative example 1, Li+ ion is not charged in the Si negative electrode active material and causes decomposition of the solid electrolyte and generates Li₂S. This result supports the reason that the use of carbon-based conductive material in the SSE system is eliminated. When carbon is not used in the negative electrode, it is possible to increase the amount of silicon negative electrode active material up to 99.9 wt%.

### (4) Quantification of SEI

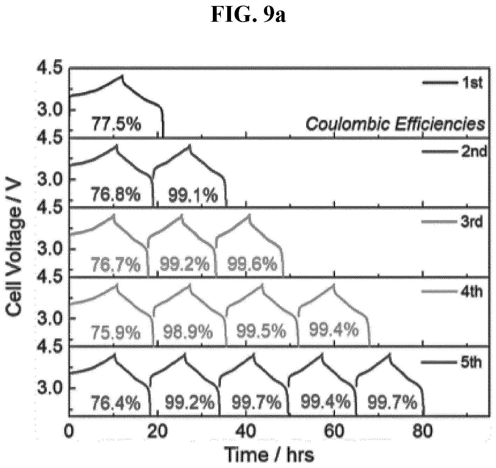

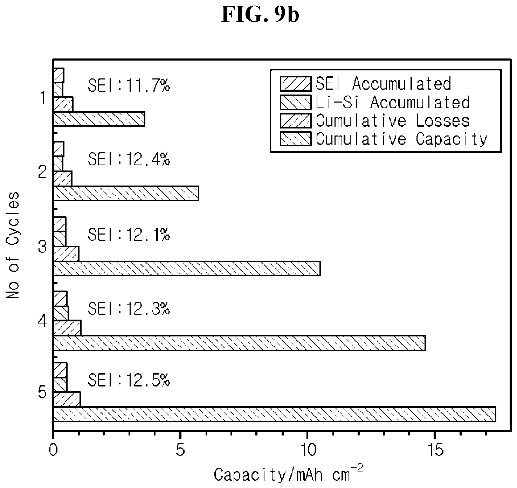

SEI and Li-Si are quantified using Titration gas chromatography (TGC) method. Through example 1-1, five batteries are manufactured and charged/discharged during first to fifth cycles. Subsequently, the positive electrode is removed from each battery, the negative electrode and SSE are put in ajar filled with argon with an addition of anhydrous ethanol to allow complete reaction of Li-Si to generate H₂ gas, and Li+ is quantified by TGC method using the generated gas. The amount of Li-Si derived from the quantified H₂ gas is calculated from a normalized H₂ gas calibration curve. Additionally, Coulombic efficiency% loss and SEI formed from quantified Li+ may be quantified. This is shown in FIGS. 9a and 9b.

Referring to FIGS. 9a to 9b, at the initial cycle, the formed SEI is 11.7% based on the total capacity of the battery, and at the second cycles, rises to 12.4%. In the subsequent cycles, SEI or active Li+ is kept stable and has no change, and this signifies that deactivation of the interface induces interface passivation which prevents continuous reaction between Li-Si and electrolyte.

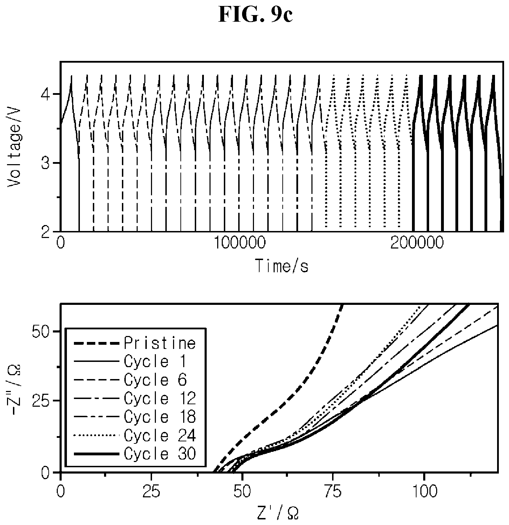

To see the increased impedance by SEI formation, electrochemical impedance spectroscopy (EIS) is measured during 30 charge/discharge cycles of the battery of example 1-1, and the resulting voltage profile is shown in FIG. 9c. In FIG. 9c, before cycles, since SEI is formed for the first time, an increase in impedance is observed after the first cycle, and this matches the TGC analysis. Subsequently, the impedance does not increase and is stably maintained during 30 cycles, and this indicates that SEI is not formed any longer.

### (5) Life characteristics

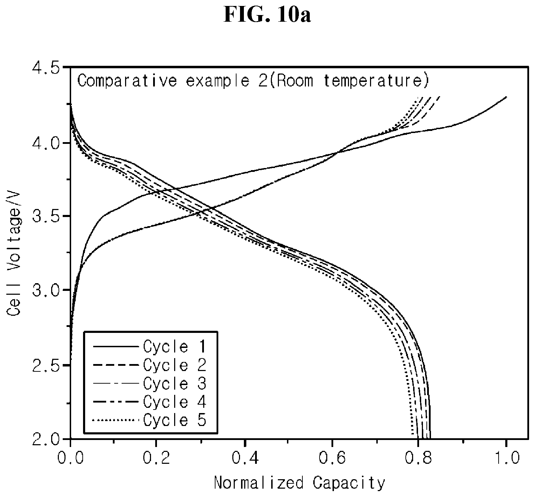

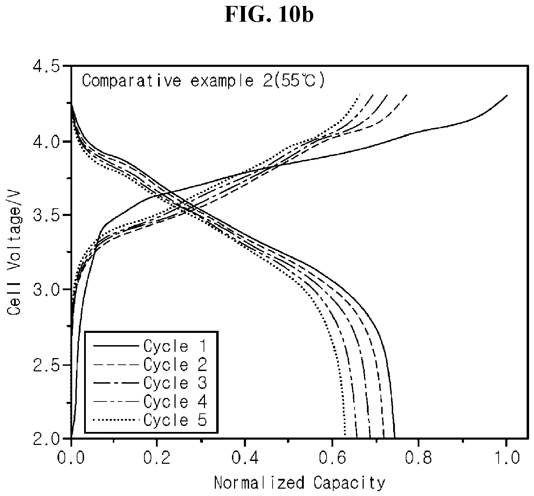

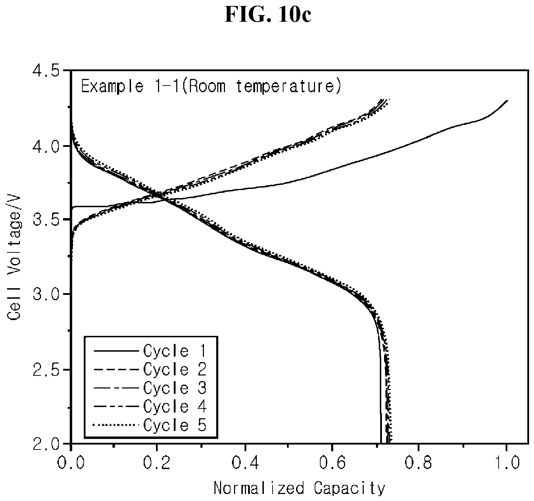

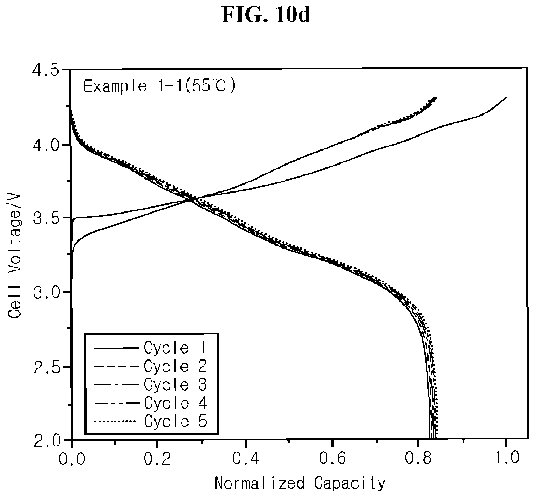

The life characteristics are compared between the battery of example 1-1 and the battery of comparative example 2 and the comparison is shown in FIGS. 10a and 10b. In the following drawings, FIGS. 10a and 10b show the life characteristics of the battery of comparative example 2 at room temperature and high temperature (55°C), and reveal that the capacity retention decreases with the increasing cycles. In contrast, the battery of example 1-1 maintains the capacity retention during cycles at room temperature or high temperature (55°C) (FIGS. 10c, 10d).

### (6) Storage characteristics

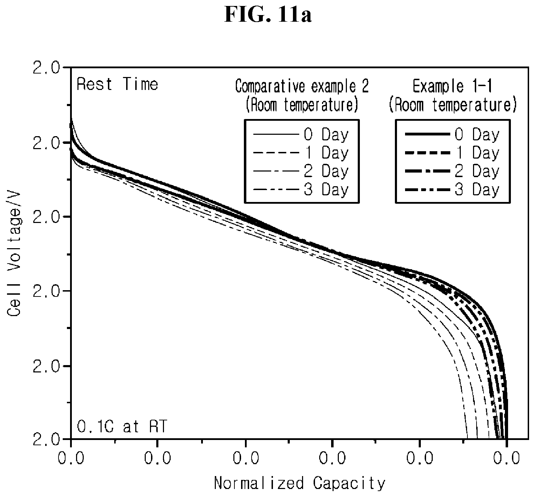

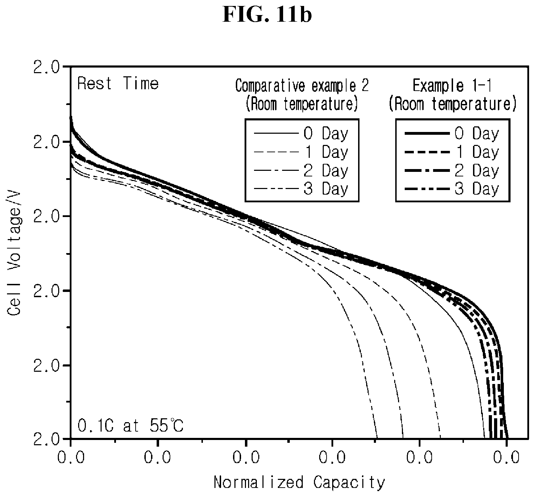

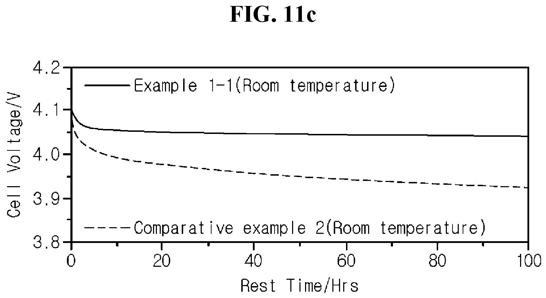

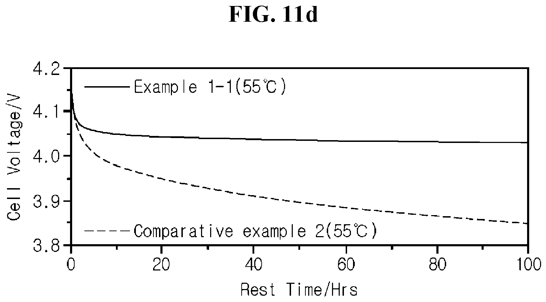

FIGS. 11a to 11d show the storage characteristics of example 1-1 and comparative example 2 at room temperature and high temperature conditions. When the fully charged batteries of example 1-1 and comparative example 2 are placed at room temperature, it is found that the battery of comparative example 2 is more likely to be discharged than the battery of the present disclosure. At 55°C, the battery of example 1-1 shows the plateau range at about 4.05V, but the battery of comparative example 2 drops down to 3.85V with the passage of 100 hours. This signifies that the carbon-based conductive material included in the negative electrode causes reduction decomposition of the solid electrolyte and the battery is self-discharged.

### (7) Cross-sectional image

To observe volume changes as a result of decreasing porosity during the lithiation process of the porous silicon electrode of the battery, ion beam cross sectional scanning electron microscopy images are captured using FEI Scios Dualbeam. Ga+ milling is performed on the charged/discharged battery of example 1-1 using a cross-sectional cleaning process at various electric currents, and SEM-EDX imaging is performed using the function rule embedded in FEI Scios Dualbeam.

The accompanying FIG. 3a shows the pristine state, and FIG. 3b shows the fully lithiated state after cycles. At the pristine state, the negative electrode shows the porous properties due to the pores between each particle and the pore size is about 3-5 microns. At the fully lithiated state, the pores become fully filled, achieving a dense lithiated silicon metallic state with limited expansion perpendicular to the thicknesswise direction of the electrode.

It seems that at the pristine state (FIG. 3a), the negative electrode remains porous with 25 to 40 vol%, and upon lithiation (FIG. 3b), volume expansion of silicon forces Si to expand into own pores, achieving a dense state with limited expansion in the Z-axis direction. This prevent excessive stresses on the SSE layer which can cause cracks to form and cells to fail.

### (8) Electrochemical performance evaluation

For the battery of example 1-1, the EIS of the discharged battery before cycles and every six cycles is measured using Solartron 1260 impedance analyzer. The EIS applies AC potential of 30 mV in the frequency range of 1 MHz to 0.1 Hz. Additionally, charging/discharging is performed under the stack pressure of 50 MPa using Neware Battery cycler, and analyzed using BTS9000 software.

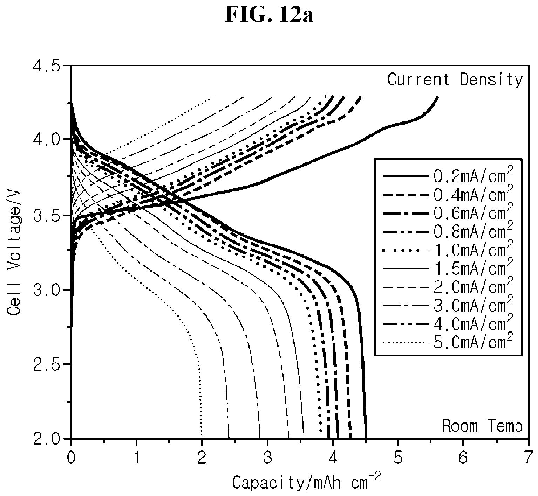

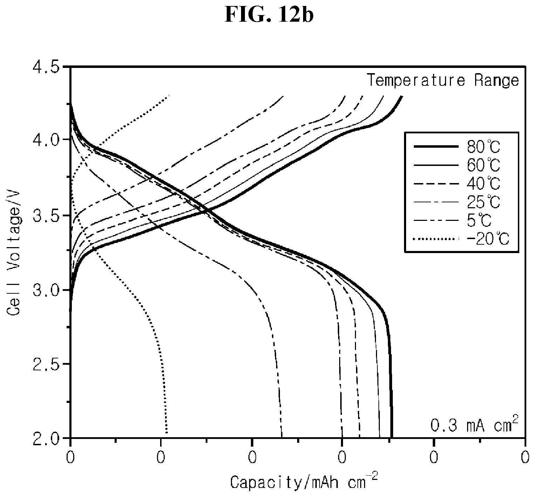

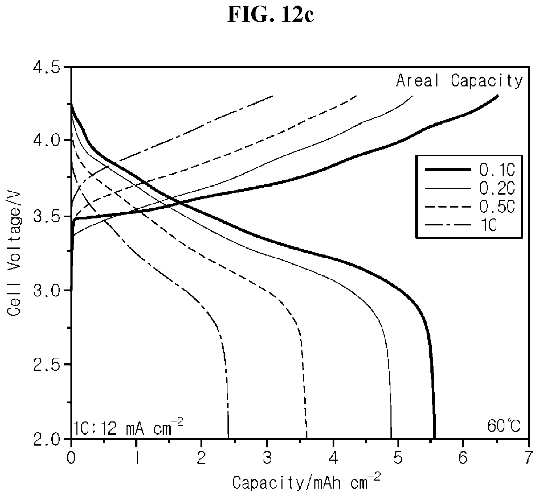

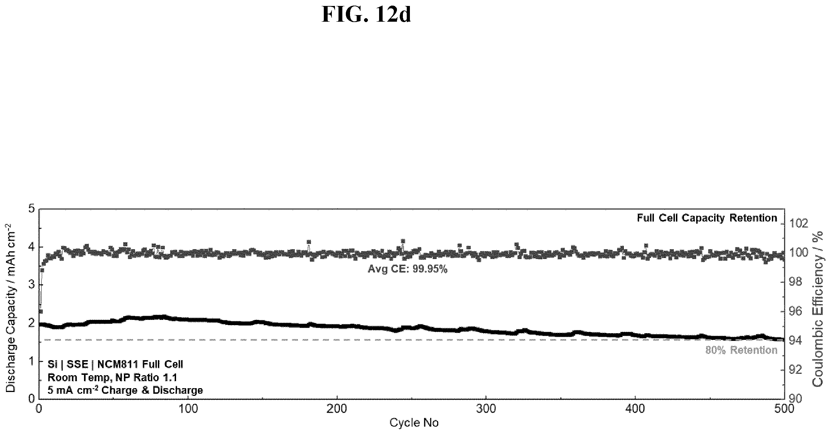

FIG. 12a shows the cycle results performed at room temperature, measured during charge/discharge with the increasing current from 0.2 mA/cm² to 5 mA/cm². At room temperature, a short circuit does not occur until 5 mA/cm². FIG. 12b shows the charge/discharge cycles with changes in temperature from -20°C to 80°C under the condition of about 0.3 mA/cm². It can be seen that with the rising temperature, the capacity of the battery increases. At low temperature, polarization of the battery remarkably increases, but it seems that this is caused by the arrhenius behavior of Li+ diffusion in SSE, and a short circuit does not occur at low temperature. FIG. 12c shows the evaluation of the negative electrode having a high area loading amount, where the capacity of the positive electrode is 12 mAh/cm². Meanwhile, to overcome the bulk impedance of the positive electrode, the full cell is allowed to operate at 60°C to improve Li+ diffusion kinetics. It can be seen that the negative electrode has the reversible capacity of 11 mAh/cm² or more under 0.1C (1.2 mAh/cm²). As a result of charging/discharging in 1C condition, the reversible capacity is 4 mAh/cm² or more. When charging/discharging continues at room temperature, it becomes an ideal operating environment of the solid state battery. According to FIG. 12d, it can be seen that after charging/discharging during 500 cycles at 5 mA/cm² at room temperature, the capacity retention is 80% and the average Coulombic efficiency is 99.95%.

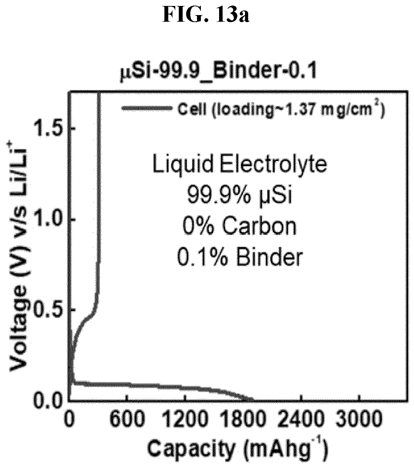

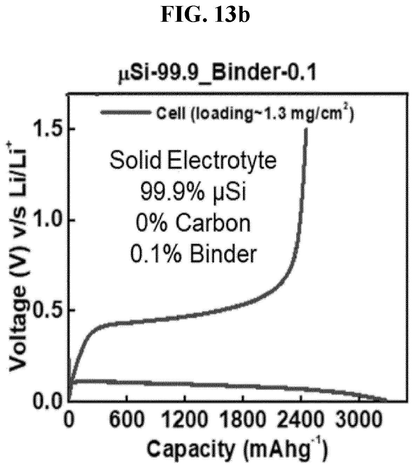

Additionally, FIG. 13a shows the charge/discharge characteristics of comparative example 3, and FIG. 13b shows the charge/discharge characteristics of the battery of example 2. For the negative electrode having the average loading amount of 1.3 mg/cm², as a result of charging/discharging at the rate of C/20, it is found that the battery of example 2 shows a clear plateau range and has better effect than the battery of comparative example 3. The battery of comparative example 3 has notable degradation of electrical and chemical properties due to the low amount of conductive material. It can be seen that the absence of carbon and binder additives in the liquid electrolyte battery causes poor capacity utilization and low first cycle Coulombic efficiency. However, in the present disclosure, in the use of sulfide-based solid electrolytes against the same Si electrode, high capacity utilization and high first cycle Coulombic efficiencies are observed.

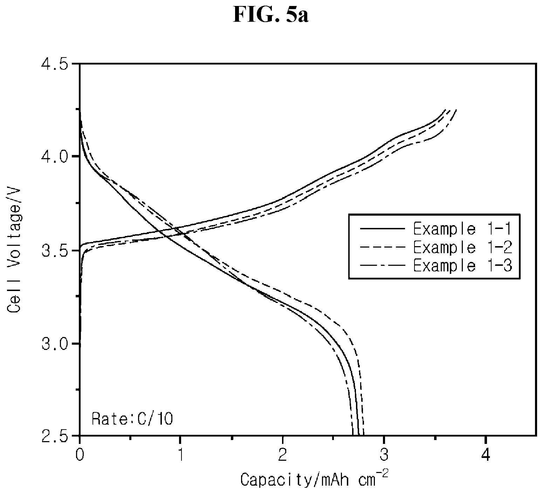

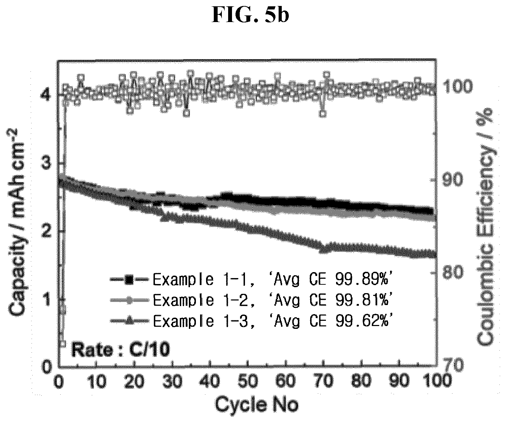

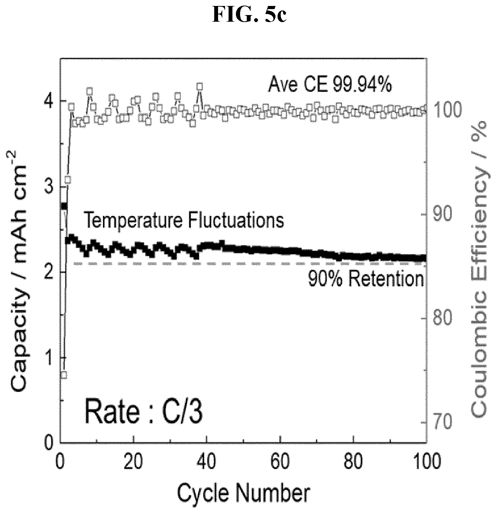

Meanwhile, FIGS. 5a to 5d show the charge/discharge characteristics and capacity characteristics of the solid state batteries having different NP ratios in example 1-1, example 1-2 and example 1-3 against the NCM811 positive electrode. In this experiment, the areal capacities of 2.5 mAh/cm² are used. FIG. 5a shows voltage profile, and FIG. 5b shows cycle performance and average Coulombic efficiency. The battery is repeatedly charged/discharged at the rate of about C/10 at room temperature, and the silicon loading amount is 0.9 mg/cm², 2.0 mg/cm² and 21.5 mg/cm² at each NP ratio. For the battery having the N/P ratio of 1.1 (comprising high Ni content NMC positive electrode and the sulfide-based solid electrolyte), by keeping the cathode capacity fixed at >2.5 mAh/cm² and lowering N/P ratio close to 1.1, average Coulombic efficiencies exceeding 99.9% with full cells are found. The rate is controlled to the rate of C/10 and C/3 under room temperature. It can be seen that all batteries cycled with more than 99% average Coulombic efficiencies per cycle, with the low NP ratio (1:1) cell cycling with more than 99.9% average Coulombic efficiencies. Meanwhile, according to FIG. 5c, for the battery of example 1-1, the current density is increased by three times from C/10 to C/3 to demonstrate high power capability and high capacity retention even at high rates. All the batteries are tested under room temperature and areal capacities of at least 2.5 mAh/cm².

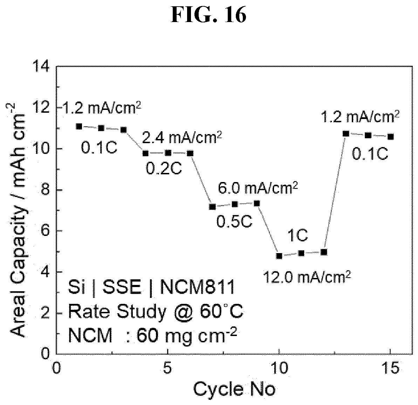

Additionally, the battery of example 1-1 is charged/discharged with varying rates, and are shown in FIG. 16. It is found that it is restored to the initial areal capacity for the same rate after repeated charge/discharge.

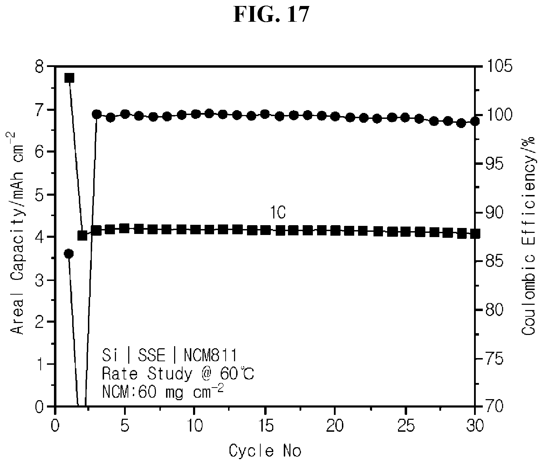

Meanwhile, the battery of example 1-1 is charged/discharged for 30 cycles at the rate of 1C and its results are shown in FIG. 17. It is found that there is almost no reduction in areal capacity and Coulombic efficiency even though the number of cycles increases.

### (9) X-ray diffraction pattern analysis of sulfide-based solid electrolyte-silicon (Si) mixture

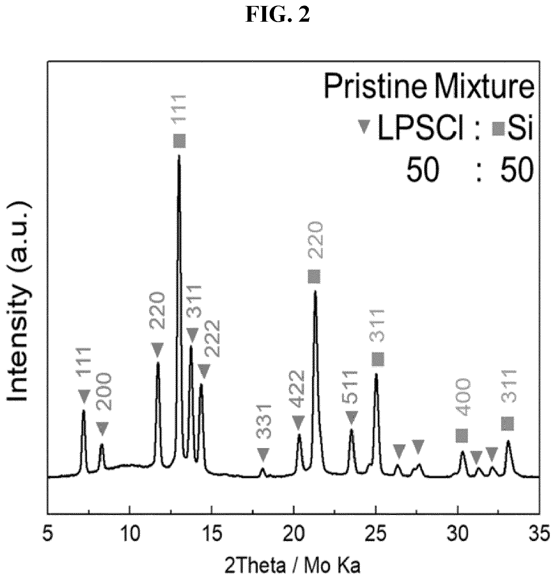

Chemical compatibility testing of sulfide-based solid electrolyte and silicon (Si) is conducted. Silicon (Si) powder and LiePSsCl are mixed at 50:50 wt%. The mixture is left to sit overnight. Subsequently, X-ray diffraction is performed using Molybdenum Ka X-ray radiation source measurements of the mixture and the results are shown in FIG. 2. It is found that the respective diffraction peaks belonging to each component is identified with no extra side products found, this is indicative of their chemical stability, and justifies their chemical compatibility.

## Claims

1. A solid state battery comprising: a negative electrode, a positive electrode and a solid electrolyte membrane interposed between the negative electrode and the positive electrode,
wherein the negative electrode comprises a negative electrode active material layer comprising silicon (Si) as a negative electrode active material,
the silicon includes silicon particles,
the negative electrode active material layer comprises the silicon (Si) in an amount of 90 wt% or more based on 100 wt% of the negative electrode active material layer, and
the solid electrolyte membrane comprises a sulfide-based solid electrolyte.

2. The solid state battery according to claim 1, wherein the negative electrode active material layer comprises the silicon (Si) in an amount of 99 wt% or more based on100 wt% of the negative electrode active material layer.

3. The solid state battery according to claim 1, wherein the negative electrode active material layer comprises the silicon (Si) in an amount of 99.9 wt% or more based on 100 wt% of the negative electrode active material layer.

4. The solid state battery according to claim 1, wherein the negative electrode comprises a current collector, and the negative electrode active material layer is formed on at least one surface of the current collector.

5. The solid state battery according to claim 1, wherein the sulfide-based solid electrolyte comprises at least one selected from LPS-based glass or glass ceramic (*x*Li₂S.yP₂S₅), or argyrodite-based sulfide-based solid electrolyte (Li₆PS₅X; X = Cl, Br, I).

6. The solid state battery according to claim 1, wherein the silicon (Si) particle has a particle size of 0.1*µ*m to 10*µ*m.

7. The solid state battery according to claim 1, wherein the negative electrode active material layer has a porosity at a state before first charge/discharge cycle of 25 vol% to 65 vol%.

8. The solid state battery according to claim 7, wherein the negative electrode active material layer has a porosity before the cycle proceeds of 25 vol% to 40 vol%.

9. The solid state battery according to claim 1, wherein the negative electrode has a porosity of less than 10 vol% at SOC of 90% to 100%.

10. The solid state battery according to claim 1, wherein the silicon (Si) having a purity of 97% or more is introduced as the negative electrode active material.

11. The solid state battery according to claim 1, wherein the positive electrode comprises a positive electrode active material layer, the positive electrode active material layer comprises lithium transition metal composite oxide as a positive electrode active material, and the transition metal comprises at least one of Co, Mn, Ni or Al.

12. The solid state battery according to claim 11, wherein the positive electrode active material layer further comprises at least one of a binder resin, a conductive material or a solid electrolyte.

13. The solid state battery according to claim 12, wherein the solid electrolyte in the positive electrode active material layer comprises the sulfide-based solid electrolyte, and the sulfide-based solid electrolyte comprises at least one selected from LPS-based glass or glass ceramic (*x*Li₂S.yP₂S₅), or argyrodite-based sulfide-based solid electrolyte (Li₆PS₅X; X = Cl, Br, I).

14. The solid state battery according to claim 11, wherein the lithium transition metal composite oxide comprises at least one of compounds represented by the following Formula 1:
[Formula 1] LiₓNiₐCo_{b}Mn_{c}M_{z}O_{y}
where 0.5≤x≤1.5, 0<a≤1, 0≤b<1, 0≤c<1, 0≤z<1, 1.5<y<5, a+b+c+z is 1 or less, and M comprises Al.

15. The solid state battery according to claim 14, wherein the a is 0.5 or more.

16. The solid state battery according to claim 14, wherein the lithium transition metal composite oxide comprises LiNi_{0.8}Co_{0.1}Mn_{0.1}O₂.

17. The solid state battery according to claim 12, wherein the positive electrode active material layer is obtained by using the positive electrode active material, the conductive material, the binder resin and the solid electrolyte by a manufacturing method according to a dry mixing process without a solvent.

18. The solid state battery according to claim 1, wherein the negative electrode active material layer comprises no conductive material.

19. The solid state battery according to claim 1, wherein the negative electrode active material layer comprises no carbon-based conductive material.

20. The solid state battery according to claim 1, wherein the battery has an NP ratio of 0.1 to 30.0.
